# EUROPEAN PATENT APPLICATION

(11) **EP 4 497 741 A1**
(43) Date of publication of application: **29.01.2025**
(21) Application number: 24189612.5
(22) Date of filing: 19.07.2024
(51) Int. Cl.: C05D 1/00, A01N 25/12, A01N 63/14, C05D 3/00, C05D 5/00, C05D 9/02, C05F 9/04, C05F 11/00, C05F 17/05, C05G 3/80, C05G 5/12, C05F 3/00, C09K 17/16

(54) **ORGANIC FERTILIZER FROM STERILIZED AND DRIED INSECT FRASS, ESPECIALLY FROM HERMETIA ILLUCENS, ITS APPLICATIONS AND METHODS OF FERTILIZATION AND IMPROVEMENT OF SOIL MOISTURE USING IT**

(30) Priority: 28.07.2023 PL 44570323
(71) Applicant: HiProMine S.A., 62-023 Robakowo (PL)
(72) Inventor: Kaczmarek, Sylwia, 62-035 Kórnik (PL); Józefiak, Damian, 62-023 Robakowo (PL); Dudek, Krzysztof, 64-552 Sedziny (PL)
(74) Representative: Grzelak, Anna

(57) **Abstract**

The subject of the invention is an organic fertilizer from sterilized and dried insect frass, especially from *Hermetia illucens* culture, and its use to improve the welfare of monocotyledonous plants, especially cereals and grasses. The invention also concerns the use of this organic fertilizer for fertilization and prevention of water stress in monocotyledonous plants, its use to improve the degree of soil moisture, especially under drought stress, and its use to increase the yield of barley and perennial ryegrass. The invention also concerns the method of fertilization and improvement of soil moisture, especially under drought stress, intended for growing monocotyledonous plants.

## Description

### FIELD OF THE INVENTION

The subject of the invention is an organic fertilizer from sterilized and dried insect frass, especially from *Hermetia illucens* culture, and its use to improve the welfare of monocotyledonous plants, especially cereals and grasses. The invention also concerns the use of organic fertilizer for fertilization and prevention of water stress in monocotyledonous plants, its use to improve the degree of soil moisture, especially under drought stress, and its use to increase the yield of barley and perennial ryegrass. The invention also relates to the method of fertilization and improvement of soil moisture, especially under drought stress, intended for growing monocotyledonous plants.

The use of organic fertilizer made from the excrements of *Hermetia illucens* insect larvae as a fertilizer for improving the welfare of monocotyledonous plants, especially for use under stress conditions, including drought stress, and the method of its application, especially for cereals and grasses, especially for barley and perennial ryegrass , are presented.

### BACKGROUND

The production of high-quality feed protein from insects has been expanding in recent years. Some species of insect larvae, such as *Hermetia illucens,* effectively convert organic waste and are used to produce wholesome feed for domestic, livestock and aquaculture animals. After the larvae are harvested, what remains is a "processed" waste substrate, constituting so-called frass - consisting of insect excrements, feed residues and moults, which can be used as a fertilizer product.

Because of the nature of insect farming which is environmentally friendly, fertilizer made from frass is the most environmentally friendly version of animal manure. The production of frass contributes to the reduction of waste, which is used as food for insects, and the breeding of insects itself does not generally involve the use of potable water and requires very low energy inputs. Insect frass can be used as a source of valuable nutrients and bioactive compounds for plants, making it attractive as a soil additive or organic fertilizer.

The literature lists a number of benefits of using frass as an organic fertilizer in sustainable agriculture, including: supplying the soil with nutrients, mainly nitrogen, in the form of compounds easily absorbed by plant tissues; increasing tolerance to abiotic stresses and resistance to plant pathogens and pests due to the presence of various compounds, secondary metabolites and microorganisms contained in frass.

Crops are exposed to a wide range of stresses, biotic and abiotic, among which water shortage is one of the main causes that reduce productivity. The increase in temperature and constant global warming intensify evaporation, reducing the water content in the soil and increasing the likelihood of drought. In agricultural terms, a drought is a prolonged shortage of soil water in a particular location, affecting a particular species or variety of plant over a certain period of time. It causes deterioration of growth and development conditions and a reduction in crop yields.

Under water deficit conditions, the water balance in plants is disrupted. Under severe drought stress, high osmotic pressure in the soil can lead to dehydration of plants. The main receptor of the water deficiency signal is the cell membrane, and its stability is a widely used criterion for assessing plant tolerance to water stress. In response to stress, plants produce excessive amounts of reactive oxygen species (ROS), which cause oxidative stress and damage chloroplasts. Under conditions of water scarcity, practices that increase the efficiency of water use by crops become important, which is key to maintaining yield levels and to raising them further under forecasted drought conditions. According to the latest report of the Institute of Soil Science and Plant Cultivation - State Research Institute in Pulawy (IUNG-PIB), an agricultural drought has occurred in Poland. IUNG-PIB informs that agricultural drought occurs in all voivodeships and covered all monitored crops of several types. This will lead to a reduction in the upcoming harvest of at least 20%.

It has been revealed that the use of fertilizer extracted from the larvae of the fly *H. illucens,* can also significantly improve the growth and growth performance of the dicotyledonous plant i.e. basil under drought conditions. Application of frass also affects the activity of plant enzymes, which accelerates metabolic processes in the plant and improves its ability to assimilate nutrients (Dominika Radzikowska-Kujawska, Zuzanna Sawinska, Monika Grzanka, Przemyslaw Lukasz Kowalczewski, Lukasz Sobiech, Stanislaw Świtek, Grzegorz Skrzypczak, Agnieszka Drozdzynska, Mariusz Slachcinski, Marcin Nowicki; Hermetia illucens frass improves the physiological state of basil (Ocimum basilicum L.) and its nutritional value under drought; Plos One; 2022).

Frass has been shown to improve shoot and root growth of several other dicotyledonous plants-basil, lettuce and parsley-grown under greenhouse conditions and had similar effects to other commonly used organic fertilizers, such as chicken manure pellets (Sara Borkent and Simon Hodge; Glasshouse Evaluation of the Black Soldier Fly Waste Product HexaFrass™ as an Organic Fertilizer; Insects 12; 2021).

The structure of monocotyledonous and dicotyledonous plants differs not only in terms of the amount of cotyledons produced by the embryo. Monocotyledonous plants include, among others: grasses and cereals. The root system of monocotyledons is bundled, with a mostly primary structure. The vascular bundles in these plants are small, scattered over the entire width of the stem and closed without pulp. Monocotyledonous plants, therefore, do not have classic stem growth in thickness. Dicotyledonous plants have large conducting bundles, arranged concentrically and may have the form of an open bundle, with a cambium, or a closed bundle. Most dicotyledonous plants have a taproot system.

Differences in structure between the two groups of plants affect their physiology and ability to withstand stress conditions, including drought. Monocotyledonous plants include grasses and cereals, which play a key role in farming.

The state of the art is therefore looking for new or improved forms of organic fertilizers and methods of application for nutrition targeting a group of monocotyledonous plants, which will not only ensure the provision of the necessary nutrients for their development, but will affect higher resistance to stress conditions, including drought stress and the overall welfare of monocotyledonous plants.

### SUMMARY OF THE INVENTION

The purpose of the invention is to overcome the indicated disadvantages known from the state of the art and to provide an optimized method of fertilizing monocotyledonous plants by optimized fertilization based on insect frass dedicated to monocotyledonous plants, especially cereals and grasses, especially for reducing the effects of stress in these plants, including water stress due to water deficiency.

The purpose of the invention is to provide a fertilizer preparation from frass extracted from the culture of *H. illucens* fly larvae in such a way that it will not only effectively fertilize, but also effectively reduce stress in plants, and consequently reduce the synthesis of secondary metabolites responsible for eliminating oxidative stress, the formation of which affects the yield of plants and their welfare. Consequently, properly fertilized monocotyledonous plants, especially cereals and grasses, show increased welfare, lower antioxidant activity of plants and better growth also under stress conditions.

The invention relates to an organic fertilizer from sterilized and dried insect frass that comprises: at least 4% by weight of dry matter of nitrogen, more preferably 4 to 10% by weight, more preferably 4.4% by weight of dry matter of nitrogen; at least 3% by weight of dry matter of phosphorus, more preferably 3 to 9% by weight, more preferably 3.7% by weight of dry matter of phosphorus; at least 3% by weight of dry matter of chitin, more preferably 3 to 12% by weight, more preferably 5% by weight of dry matter of chitin; at least 1% by weight of dry matter of potassium, more preferably 1 to 9% by weight, more preferably 3.5% by weight of dry matter of potassium; at least 0.2% by weight of dry matter of calcium, more preferably 0.2 to 5% by weight, more preferably 1% by weight of dry matter of calcium; at least 0.2% by weight of dry matter of magnesium, more preferably 0.2 to 5% by weight, more preferably1% by weight of dry matter of magnesium; with the organic matter constituting at least 65% by weight of dry matter, more preferably 65 to 92% by weight, more preferably 87% by weight of dry matter.

The organic fertilizer preferably further comprises at least 3000.0 mg/kg of dry matter of sulphur, more preferably from 3000 to 30000 mg/kg, more preferably 9590.0 mg/kg of dry matter of sulphur; at least 300.0 mg/kg of dry matter of iron, more preferably from 300 to 3000 mg/kg, more preferably 1125.0 mg/kg of dry matter of iron; at least 50 mg/kg of dry matter of zinc, more preferably from 50 to 1500 mg/kg, more preferably 286.0 mg/kg of dry matter of zinc; at least 5.0 mg/kg of dry matter of copper, more preferably from 5 to 150 mg/kg, more preferably 27.4 mg/kg of dry matter of copper, the fat constituting at least 0.2% by weight of dry matter, more preferably 0.2 to 5% by weight, more preferably 2.1% by weight of dry matter.

In a preferred organic fertilizer, insect frass is from the breeding of *Hermetia illucens* larvae.

The organic fertilizer preferably in granulated form, preferably with an average granulate size in the range of 0.1-3cm³±20%, more preferably 0.4-1.5cm³±20%, more preferably 0.5-1cm³±20%, the most preferably 0.6cm³±20%.

The invention also relates to the use of an organic fertilizer according to the invention for the fertilization and prevention of water stress in monocotyledonous plants, advantageously selected from: cereals selected from wheat, barley, oat, corn, rye, triticale, millet, and mixtures thereof; and/or grasses selected from perennial ryegrass, italian ryegrass, carpet bentgrass, common bentgrass, reed canary grass, yellow oatgrass, meadow fescue, red fescue, cocksfoot, timothy grass, meadowgrass, rough stalk bluegrass, fowl bluegrass, meadow foxtail, tall oatgrass and mixtures thereof.

In the preferred use of organic fertilizer, it is used in doses of 0.5 to 5 tons per hectare of land, preferably 2 to 3 tons per hectare of fertilized soil surface.

In the preferred use of organic fertilizer, it is applied to the soil together when sowing as close to the seed as possible, preferably together with the seed.

In the preferred use of organic fertilizer, it is applied for the pre-sowing cultivation, preferably for winter crops.

In the preferred use of organic fertilizer, it is applied for top dressing.

In the preferred use of organic fertilizer, when the fertilizer is used for cereals, it is applied by spreading it evenly on the field surface using a fertilizer spreader and mixing it with the soil.

In the preferred use of organic fertilizer, when the fertilizer is used for grasses to fertilize established lawns, it is applied in late summer or spring to the soil intended for the establishment of a lawn, mixing it with the topsoil, then levelling the soil and sowing grass on the soil thus prepared.

The invention also relates to the use of organic fertilizer according to the invention to increase barley yields, especially under water deficit conditions, with the fertilizer being applied at rates of 0.5 to 5 tons per hectare of land, preferably 2 to 3 tons per hectare of fertilized soil surface.

The invention also relates to the use of organic fertilizer according to the invention to increase the yield of perennial ryegras, especially under water deficit conditions, with the fertilizer being applied at rates of 0.5 to 5 tons per hectare of land, preferably 2 to 3 tons per hectare of fertilized soil surface.

The invention also relates to the use of organic fertilizer according to the invention to improve the moisture content of soil, especially under drought stress.

The invention also relates to the use of organic fertilizer in the form of sterilized and dried insect frass from the breeding of *Hermetia illucens* larvae for fertilizing and preventing the occurrence of water stress in monocotyledonous plants, with the organic fertilizer comprising: at least 4% by weight of dry matter of nitrogen, more preferably 4 to 10% by weight, more preferably 4.4% by weight of dry matter of nitrogen; at least 3% by weight of dry matter of phosphorus, more preferably 3 to 9% by weight, more preferably 3.7% by weight of dry matter of phosphorus; at least 3% by weight of dry matter of chitin, more preferably 3 to 12% by weight, more preferably 5% by weight of dry matter of chitin dry; at least 1% by weight of dry matter of potassium, more preferably 1 to 9% by weight, more preferably 3.5% by weight of dry matter of potassium dry; at least 0.2% by weight of dry matter of calcium, more preferably 0.2 to 5% by weight, more preferably 1% by weight of dry matter of calcium; at least 0.2% by weight of dry matter of magnesium, more preferably 0.2 to 5% by weight, more preferably 1% by weight of dry matter of magnesium; with the organic matter being at least 65% by weight of dry matter, more preferably 65 to 92% by weight, more preferably 87% by weight of dry matter, at least 3000.0 mg/kg of dry matter of sulphur, more preferably 3000 to 30000 mg/kg, more preferably 9590.0 mg/kg of dry matter of sulphur; at least 300.0 mg/kg of dry matter of iron, more preferably 300 to 3000 mg/kg, more preferably 1125.0 mg/kg of dry matter of iron; at least 50 mg/kg of dry matter of zinc, more preferably from 50 to 1500 mg/kg, more preferably 286.0 mg/kg of dry matter of zinc; at least 5.0 mg/kg of dry matter of copper, more preferably from 5 to 150 mg/kg, more preferably 27.4 mg/kg of dry matter of copper; wherein preferably the fat is at least 0.2% by weight of dry matter, more preferably 0.2 to 5% by weight, more preferably 2.1% by weight of dry matter; wherein the organic fertilizer is in granular form with an average granular size in the range of 0.1-3cm³±20%, more preferably, 0.4-1.5cm³±20%, more preferably 0.5-1cm3±20%, the most preferably 0.6cm3±20%; wherein the monocotyledonous plants are selected from: cereals selected from wheat, barley, oat, corn, rye, triticale, millet, and mixtures thereof; and/or grasses selected from perennial ryegrass, italian ryegrass, carpet bentgrass, common bentgrass, reed canary grass, yellow oatgrass, meadow fescue, red fescue, cocksfoot, timothy grass, meadowgrass, rough stalk bluegrass, fowl bluegrass, meadow foxtail, tall oatgrass and mixtures thereof.

In the preferred use of organic fertilizer, it is used in doses of 0.5 to 5 tons per hectare of land, preferably 2 to 3 tons per hectare of fertilized soil surface.

In the preferred use of organic fertilizer, it is applied to the soil together when sowing as close to the seed as possible, preferably together with the seed.

In the preferred use of organic fertilizer, it is applied for the pre-sowing crops, preferably for winter crops.

In the preferred use of organic fertilizer, it is applied for top dressing.

In the preferred use of organic fertilizer, when the fertilizer is used for cereals, it is applied by spreading it evenly on the field surface using a fertilizer spreader and mixing it with the soil.

In the preferred use of organic fertilizer, when the fertilizer is used for grasses to fertilize established lawns, it is applied in late summer or spring to the soil intended for the establishment of a lawn, mixing it with the topsoil, then levelling the soil and sowing grass on the soil thus prepared.

In the preferred use of organic fertilizer, the organic fertilizer comprises 4.4% by weight of dry matter of nitrogen; 3.7% by weight of dry matter of phosphorus; 5% by weight of dry matter of chitin; 3.5% by weight of dry matter of potassium; 1% by weight of dry matter of calcium; 1% by weight of dry matter of magnesium; 9590.0 mg/kg dry matter of sulphur; 1125.0 mg/kg dry matter of iron; 286.0 mg/kg dry matter of zinc, 27.4 mg/kg of dry matter of copper, wherein the organic matter constitutes 87% by weight of dry matter, wherein fat constitutes 2.1% by weight of dry matter, wherein the organic fertilizer is in granulated form with an average granulate size of 0.6cm³±20%.

In the preferred use of organic fertilizer, it is used for barley.

In the preferred use of organic fertilizer, is is used for perennial ryegrass.

The invention also relates to a method of fertilizing and improving the degree of moisture content of soil, especially subjected to drought stress, intended for the cultivation of monocotyledonous crops, which includes a step in which organic fertilizer according to the invention is applied to the soil at doses of 0.5 to 5 tons per hectare of land area, advantageously 2 to 3 tons per hectare of soil surface area, where monocotyledonous crops are selected from cereals selected from wheat, barley, oat, corn, rye, triticale, millet, and mixtures thereof; and/or grasses selected from perennial ryegrass, italian ryegrass, carpet bentgrass, common bentgrass, reed canary grass, yellow oatgrass, meadow fescue, red fescue, cocksfoot, timothy grass, meadowgrass, rough stalk bluegrass, fowl bluegrass, meadow foxtail, tall oatgrass and mixtures thereof.

In the preferred method, the fertilizer is applied for top dressing.

In the preferred method, the fertilizer is applied for pre-sowing cultivation, preferably for winter crops.

In the preferred method, the fertilizer is applied to the soil together when sowing as close to the seed as possible, preferably together with the seed.

In the preferred method, when the fertilizer is applied to soil intended for growing cereals, it is distributed evenly on the field surface using a fertilizer spreader and mixed with the soil.

In the preferred method, when the fertilizer is applied to the soil intended for establishing a lawn, it is applied in late summer or spring to the soil intended for establishing a lawn and then mixed with the upper layer of soil, then the soil is levelled and grass is sown on the soil thus prepared.

In the preferred method, the cereal is barley.

In the preferred method, the grass is perennial ryegrass.

Unexpectedly, it turned out that the application of an insect-derived organic fertilizer, preferably from frass obtained from the breeding of *H. illucens* fly larvae, has a beneficial effect on alleviating the effect of water stress in monocotyledonous plants, especially in cereals and grasses. Therefore, its use for fertilizing monocotyledonous plants especially in the amount of 7.5-15g/L soil, more preferably in the amount of 10-12.5-15g/L soil significantly improves the overall welfare of plants and especially their resistance to stress conditions, especially those caused by drought. Compared to known organic fertilizers, significant beneficial effects of fertilization with HPS-G frass fertilizer were observed, in particular:
- achieving increased welfare of monocotyledonous plants; increasing yield - fresh weight of monocotyledonous plants;
- reducing the impact of stress conditions, especially in the form of water deficit, on monocotyledonous plants;
- increasing photosynthesis efficiency in monocotyledonous plants;
- increasing soil moisture and stabilizing this moisture and thus the welfare of cultivated monocotyledonous plants;
- more preferred adaptation of monocotyledonous plants to dark conditions.

In the light of the demonstrated beneficial effects of HPS-G fertilizer on the welfare of cultivated monocotyledonous plants, it can be successfully used for monocotyledonous species, which include cereals, for example selected from: wheat, barley, oat, corn, rye, triticale, millet, and mixtures thereof; and/or grasses selected from perennial ryegrass, italian ryegrass, carpet bentgrass, common bentgrass, reed canary grass, yellow oatgrass, meadow fescue, red fescue, cocksfoot, timothy grass, meadowgrass, rough stalk bluegrass, fowl bluegrass, meadow foxtail, tall oatgrass and mixtures thereof.

Monocotyledonous plants, especially cereals and grasses, differ in the structure of their root system from dicotyledonous plants, including other groups of crops such as vegetables.

Cereals, including barley, develop a bundle root system, which includes embryonic roots and bundle roots. The root system of cereals is shallow, most of the root mass of cereals is in the soil layer up to 20 cm.

Grasses, including perennial ryegrass, have a well-developed root system, but with a very shallow reach, creating a compact turf (the largest root mass is located at a depth of up to 10 cm).

A different root system is characteristic of dicotyledonous plants, which produce a tap system consisting of one main root, growing deep vertically down, and lateral roots. The root system of cultivated dicotyledonous plants reaches much deeper. For example, the root system of vegetables such as broccoli, beans, peas, leeks, cauliflowers and some varieties of lettuce usually reaches up to 60 cm.

Additional differences in the water management of different groups of plants is that plants take up significant amounts of water from the soil, but only about 0.05% is used to create matter. The ratio of the number of weight units of transpired water to the units of dry matter produced during that time determines the transpiration coefficient, which in cereals can reach up to 1530 (that is, 1530g of transpired water is needed to produce 1g of dry matter) in vegetables it is much lower, averaging about 650. Hence, water reserves in the soil are so important for cereals and grasses.

During the intensive period of building the root system, cereals, provided they are optimally supplied with water, reduce the rooting depth. All cereals grow over the topsoil the more intensively, the lower the water and nutritional potential. The emerging drought stress to which the plant is subjected during the growing season is associated with increased costs for the plant's investment in the root system. One of the indicated critical periods in terms of water requirements for cereals and grasses is grain germination. This period is particularly important in relation to water demand, because the root system is not yet strongly developed (the period of intensive development occurs at the beginning of the shooting phase and lasts until the end of the earing phase).

Grasses, including ryegrass, on the other hand, require soils with regulated water relations, its water needs are described as high.

Unexpectedly, it turned out that HPS-G fertilizer works very well for monocotyledonous plants in conditions of limited water availability in the substrate affecting their welfare. This is most likely due, among other things, to the high content of humic acids (for example, about 300.3 g/kg), which has a very beneficial effect on increasing the water capacity of the soil and thus reducing the effects of drought on plants. Humic acids improve structure, prevent water and nutrient loss in the soil, improve nutrient availability, and increase root respiration. Used as positive controls, other organic fertilizers did not produce such significant results.

In addition, the granular form of HPS-G fertilizer used proved to be much more advantageous than the loose form in many respects. The main problem with the loose form is the difficulty of precise application. The granular form of HPS-G fertilizer therefore has significant advantages related to application and use:
- Ensures precision of sowing - thanks to the granulate form, any spreader can precisely apply the intended dose of fertilizer to the soil.
- It is suitable for parallel sowing - it allows HPS-G fertilizer to be applied to the soil together during sowing, as close to the seed as possible, so that the root system has access to the fertilizer from the very beginning.
- Thanks to granulation, the fertilizer can be applied both before sowing and as top dressing (on already growing plants), because thanks to granulation the fertilizer falls under the plant (close to the roots) and does not hang on the leaves, which is often the case with the powder form.
- Granulated fertilizer is also safer in terms of sterility - additional thermal treatment takes place during the production process.
- It provides increased storage safety - granulated fertilizer absorbs less moisture from the environment than the loose form, which guarantees much better durability of the product and extends its shelf life.

The granulate form ensures higher concentration and a higher percentage of active ingredients. This means that the grower needs much less fertilizer compared to the loose form to fertilize a larger cultivation area.

For optimized growth and welfare of monocotyledonous plants, HPS-G fertilizer was applied to cereals such as: wheat, barley, oat, corn, rye, triticale, millet in doses of 0.5 to 5 tons per hectare of area, preferably 2 to 3 tons per hectare of area, and for grasses such as perennial ryegrass, italian ryegrass, carpet bentgrass, common bentgrass, reed canary grass, yellow oatgrass, meadow fescue, red fescue, cocksfoot, timothy grass, meadowgrass, rough stalk bluegrass, fowl bluegrass, meadow foxtail, tall oatgrass or mixtures thereof at a dose of 0.5 to 5 kg per 10m² of area, preferably in the range of 2-3 kg per 10m² of area.

In the case of cereals, it turned out to be beneficial to use HPS-G fertilizer by spreading it evenly on the field surface using a fertilizer spreader and mixing it with the soil. It has been found that the fertilizer is best applied for pre-sowing cultivation.

When used for grasses, especially for fertilizing lawns, it has been found that HPS-G fertilizer is best applied in late summer or spring to the soil intended for establishing a lawn, mixing it with the topsoil, then levelling and sowing the grass into the soil thus prepared.

The publications cited in the description and the references given therein are also hereby incorporated as references.

### BRIEF DESCRIPTION OF THE DRAWINGS

For a better understanding of the invention, it is illustrated in embodiments and in the accompanying drawings, in which
**Fig. 1** Presents the effect of applied fertilizer on barley cultivation: 1- negative control - no fertilizer, 2-positive control - bovine Florovit 10g/L, 3- HPS-G 10g/L, 4- HPS-G 12.5 g/L.
**Fig. 2** Presents the effect of applied fertilizer on ryegrass cultivation: 1- negative control - no fertilizer, 2- positive control - bovine Florovit 10g/L, 3- HPS-G 10g/L, 4- HPS-G 12.5 g/L.

### EMBODIMENTS OF THE INVENTION

The following examples are provided solely for the purpose of illustrating the invention and explaining particular aspects thereof and are not intended to limit it and should not be construed as constituting the entire scope thereof as defined in the appended claims.

The following examples, unless otherwise indicated, used art-standard materials and methods or followed the manufacturers' recommendations for specific materials and methods.

### EXAMPLES

### Example 1. Production of fertilizer in the form of granulate obtained from frass from breeding Hermetia illucens larvae and determining its properties.

**I.** *Hermetia illucens* were reared on breeding lines and fed with forage. Feed was prepared on site from raw materials of plant origin. The production lines were located in a closed room at a temperature of 20-30°C. Larvae excrements in the form of dry, fine pellets remained as a uniform layer on the line, the thickness of which reached about 4-5 cm at the end of the production cycle. The manure (frass) produced in this way may comprise shredded residues of standardized feed used for breeding *Hermetia illucens* consisting of: wheat bran, biomass of plant origin in the form of pomace from fruit and vegetable production, fruit and vegetable peelings, potato pulp, post-extraction meal (Non-GMO).
   The larvae were separated from the manure by sieving and transported to a buffer tank. The buffer tank was equipped with a scraper that moved to mix the contents to prevent clumping, thus facilitating the movement of the material to the screw feeder. From the screw feeder, the manure was transported to a drum dryer, where it was dried at 130°C for 20 minutes.
   After the material was dried to the desired dry matter, it was transported with another screw feeder to the sterilizer. The dried fertilizer in granular form in accordance with Regulation No. 142/2011 (EU) was held for 60 minutes at 70°C. The dried fertilizer thus sterilized was then transported pneumatically to a pelletizer, where it was pelletized. The pellets obtained are transported by bucket conveyors to a cooler and then to a packing station. During the process, the dry matter of the material and the temperature of the drying air in the equipment are controlled.
   The final insect granular fertilizer obtained, named HPS-G, was subjected to inspection for microbiological purity, dry matter and quantitative/qualitative composition parameters, as well as other guidelines and standards important for the economic marketing of such fertilizer, which it must meet.
**II.** The content of organic and inorganic components important for plants was measured in the obtained granulated fertilizer.

The following analyses were performed for the produced granulated fertilizer:
- fat in accordance with the method of Commission Regulation (EC) No. 152/2009, Annex III, Part H, Bcccceaiop Methodology
- zinc according to the PB-186/lCP method, ed. IV of 02/03/2020
- phosphorus according to the PB-186/1CP method, ed. IV of 02/03/2020
- magnesium according to the PB-186/lCP method, ed. IV of 02/03/2020
- copper according to the PB-186/1CP method, ed. IV of 02/03/2020
- potassium according to the PB-186/1CP method, ed. IV of 02/03/2020
- sulphur according to the PB-186/1CP method, ed. IV of 02/03/2020
- calcium according to the PB-186/1CP method, ed. IV of 02/03/2020
- iron according to the PB-186/1CP method, ed. IV of 02/03/2020
- nitrogen in accordance with the PN-EN 13342:2002 methodology
- organic substance in accordance with the PN-EN 12879:2004 methodology
- dry matter in accordance with the PN-EN 12880:2004 methodology
- ash in analytical condition in accordance with the PB/FCH/92/E:29/08/2019 methodology.

The content of microbiological and parasitic contaminants was measured in the obtained granulated fertilizer. The microbiological purity was assessed on a total of 100 fertilizer samples.

The level of presence of microbiological organisms in the fertilizer was determined
- Salmonella bacilli according to the PN-EN-ISO standard,
- Enterobacteriaceae according to the PN-EN-ISO 21528-2:2017-08 standard,
- Clostridium perfringens according to standard PB-12-00-00 ed. 1 of 13/02/2012, and
- total microbial count according to PN-EN-ISO 4833-1:2013-12), which the manufactured HPS-G fertilizer met.

Additionally, microbiological and parasitic contaminants were determined in the obtained granulated fertilizer. Based on the analyses, the following results were obtained, which confirmed the microbiological purity of the produced granulated HPS-G fertilizer: Enterobacteriaceae - <1000 cfu/g; Escherichia coli - <1000 cfu/g; Salmonella spp. - absent in 25 g; Ascaris sp. - absent in 25 g; Trichuris sp. - absent in 25 g; Toxocara sp - absent in 25 g.

An analysis of the level of pollutants was carried out, marking them in accordance with the Act Journal of Laws of 2008, No. 119, item 765. The permissible value of impurities, in accordance with the standards, does not exceed 1 kg of dry matter of the fertilizer: chromium - 100 mg; cadmium - 5 mg; nickel - 60 mg; lead - 140 mg; mercury - 2 mg. From the analysis carried out, no exceedance of the aforementioned standard for these pollutants was shown, on the contrary, generally the indicated pollutants were not present.

Sensory analysis of the fertilizer after the granulation process was carried out, which showed:
- Form: solid, granular with an average diameter of 6±20% mm, without foreign matter;
- Appearance (colour): dark brown;
- Odour: specific to the product.

The produced granulated insect fertilizer "HiProSoil granulate", abbreviated as HPS-G, comprised the following nutrient content - the average results obtained are presented in **Tab. 1.**

**Tab. 1.Quantitative/qualitative composition of granulated HPS-G fertilizer**

| **Analyses** | **HiProSoil granulate (HPS-G)** | |
|---|---|---|
| | **Result** | **unit** |
| fat | 2.1 | % of dry matter |
| zinc | 286.0 | mg/kg of dry matter |
| phosphorus | 3.7 | % of dry matter |
| magnesium | 1.0 | % of dry matter |
| copper | 27.4 | mg/kg of dry matter |
| potassium | 3.5 | % of dry matter |
| sulphur | 9590.0 | mg/kg of dry matter |
| calcium | 1.0 | % of dry matter |
| iron | 1125.0 | mg/kg of dry matter |
| nitrogen | 4.4 | % of dry matter |
| organic matter | 87.0 | % of dry matter |
| dry matter | 90.0 | % |
| chitin | 5.0 | % of dry matter |

The HPS-G insect fertilizer in granulated form produced in this way was used in further examples for test studies on plants.

### Example 2. Determining the effective dose of HPS-G fertilizer for monocotyledonous plants

First, dose response studies were carried out to determine the most efficient/effective doses of HPS-G organic insect fertilizer for the cultivation of monocotyledonous plants, especially grasses and cereals. The effectiveness of the doses was evaluated by assessing the fresh weight of the aboveground parts of these plants.

The effect of the insect organic fertilizer **HPS-G** was compared to a negative control, which were cultures without the addition of any fertilizer, and to positive controls, which were cultures with the application of other animal organic fertilizers. As positive controls, commercially available organic granulate fertilizers from Florovit, Poland were used (https://florovit.pl/hobby/produkty/wszystkie), selected from: granulated horse manure, granulated chicken manure, granulated cattle manure, which according to the manufacturer's declaration have the following composition:
**Florovit horse** - organic granulated horse fertilizer: Organic fertilizer [%] d.m. 1.7%, P (P2O5) [%] d.m. min 2.0%, K (K2O) [%] d.m. min 1.7%, organic substances [%] d.m. min 60%;
**Florovit poultry** - organic granulated poultry fertilizer: Organic fertilizer [%] d.m. 3.0%, P (P2O5) [%] d.m. min 2.3%, K (K2O) [%] d.m. min 2.0%, organic substances [%] d.m. min 55%;
**Florovit cattle** - organic granulated cattle fertilizer: Organic fertilizer [%] d.m. 2.8%, P (P2O5) [%] d.m. min 2.8%, K (K2O) [%] d.m. min 2.0%, organic substances [%] d.m. min 60%;

The experimental rates used for each fertilizer and for the controls are shown below:
- negative control without fertilizer;
- positive control - Florovit horse in a dose of 10g/L;
- positive control - Florovit poultry in a dose of 10g/L;
- positive control - Florovit cattle in a dose of 10g/L;
- HPS-G - dose 1 i.e. 7.5g/L;
- HPS-G - dose 2 i.e. 10g/L;
- HPS-G - dose 3 i.e. 12.5g/L;
- HPS-G - dose 4 i.e. 15g/L;
- HPS-G dose 5 i.e.17.5g/L.

Vase tests were performed in vases with a capacity of 0.25 L, dimensions of 5.5 cm x 5.5 cm and a height of 8.25 cm. The pots were filled with 80% soil, i.e. 0.2 L.

The effectiveness of the organic fertilizer was evaluated for 3 methods of applying it to plants:
1^{st} method of application - by mixing the fertilizer with the entire soil layer in the pot,
2^{nd} method of application - by laying the fertilizer on the soil surface and covering the fertilizer with a 1 cm layer of soil without mixing,
3^{rd} method of application - by spot-feeding fertilizer granules to two extreme places in the pot.

The plants were grown in a greenhouse using the following standardized conditions: 16:8 (Day:Night) photoperiod, 22°C ±2°C temperature, 400 W sodium (HPS) lighting (Elektro-Valo Oy Netafim, Avi: 13473/, Uusikaupunki, Finland.

Experimental breeding was carried out on the following species of monocotyledonous plants: barley (*Hordeum vulgare*) was tested as a cereal field plant, and perennial ryegrass (*Lolium parenne*) was tested as a grass plant.

After applying a specific fertilizer in a specific amount, the soil was watered and seeds were sown in the following amounts: ryegrass (20 seeds /pot), barley (15 grains/pot). The seeds were purchased from PPHU "OGRODNIK", Poland. The pots were watered every 48 h at the rate of 20 ml/pot.

After 40 days of cultivation with or without the specified amounts of fertilizer in the scheme of its administration described earlier, the resulting fresh weight of whole plants was examined.

Statistical analysis of the data was performed using Statistica 13 (Dell Software Inc., USA) and R v4.1.2 software (according to the methodology indicated in the publication Kowalczewski P L, Zembrzuska J, Drozdzynska A, Smarzynski K, Radzikowska D, Kieliszek M, et al. Influence of potato variety on polyphenol profile composition and glycoalcaloid contents of potato juice. Open Chem. 2021; 19: 1216-1223. Https://doi.org/10.1515/chem-2021-0109) with agricolae v1.3-5 package (according to R Core Team. R: A language and environment for statistical computing. Vienna. Austria: R Foundation for Statistical Computing; 2022. https://wwwr-project.org). Three independent measurements were taken for each test, unless otherwise noted. All measurements were examined using one-way analysis of variance independently for each dependent variable or two-way ANOVA to assess factor interactions. Tukey's post-hoc multiple comparison (HSD) tests were used to identify statistically homogeneous subsets at α = 0.05 .The results for barley are shown in **Tab. 2** and for ryegrass in **Tab. 3.**

**Tab. 2. Fresh weight of whole barley plants depending on the fertilizer used, its dose and method of application**

| **Fertilizer** | **Dosage methods** | | | |
|---|---|---|---|---|
| | **mixing with the entire soil layer** | **covering the fertilizer with a 1 cm layer of soil** | **spot application of granulate** | **average** |
| **Negative control** | 19.08 | 21.96 | 17.62 | 19.55 |
| **Florovit horse** | **15.27** | **24.37** | **21.39** | **20.34** |
| **Florovit poultry** | 16.28 | 13.28 | 21.61 | 17.06 |
| **Florovit cattle** | 14.91 | 13.88 | 19.58 | 16.12 |
| **HPS-G 7.5 g** | 20.98 | 16.29 | 18.35 | 18.54 |
| **HPS-G 10 g** | **21.40** | **20.44** | **18.91** | **20.25** |
| **HPS-G 12.5 g** | **22.16** | **20.83** | **18.39** | **20.46** |
| **HPS-G 15 g** | **19.63** | **22.31** | **23.09** | **21.68** |
| **HPS-G 17.5 g** | 16.71 | 21.71 | 19.95 | 19.46 |
| **Average for application method** | 18.49 | 19.45 | 19.88 | - |

| | | | | |
|---|---|---|---|---|
| **Tukey's HSD P=.05** r.n. | | | | |

For the monocotyledonous cereal representative in the form of barley, the most preferable doses of applied HPS-G fertilizer were found to be in the range of 10g/L to 15 g/L. The indicated doses of HPS-G fertilizer were equally effective for all three tested fertilizer application methods in barley cultivation.

**Tab. 3. Fresh weight of whole perennial ryegrass plants depending on the fertilizer used, its dose and method of application**

| **Fertilizer** | **Dosage methods** | | | |
|---|---|---|---|---|
| | **mixing with the entire soil layer** | **covering the fertilizer with a 1 cm layer of soil** | **spot application of granulate** | **average** |
| **Negative control** | 5.65 | 5.65 | 5.65 | 5.65 |
| **Florovit horse** | 5.38 | 4.06 | 5.61 | 5.02 |
| **Florovit poultry** | 4.49 | 3.97 | 4.55 | 4.34 |
| **Florovit cattle** | 3.73 | 5.28 | 3.82 | 4.28 |
| **HPS-G 7.5 g** | 4.32 | 5.31 | 4.34 | 4.66 |
| **HPS-G 10 g** | **3.40** | **5.24** | **5.72** | **4.79** |
| **HPS-G 12.5 g** | **5.07** | **3.90** | **5.50** | **4.82** |
| **HPS-G 15 g** | 2.90 | 3.13 | 2.65 | 2.89 |
| **HPS-G 17.5 g** | 3.68 | 4.06 | 3.53 | 3.76 |
| **Average for application method** | 4.29 | 4.51 | 4.60 | |

| | | | | |
|---|---|---|---|---|
| **Tukey's HSD P=.05** r.n. | | | | |

For the monocotyledonous grass representative in the form of ryegrass, the best doses of applied HPS-G fertilizer turned out to be 10g/L and 12.5 g/L. With both the 10g/L and 12.5 g/L doses indicated, spot application of the fertilizer was the most effective method of application.

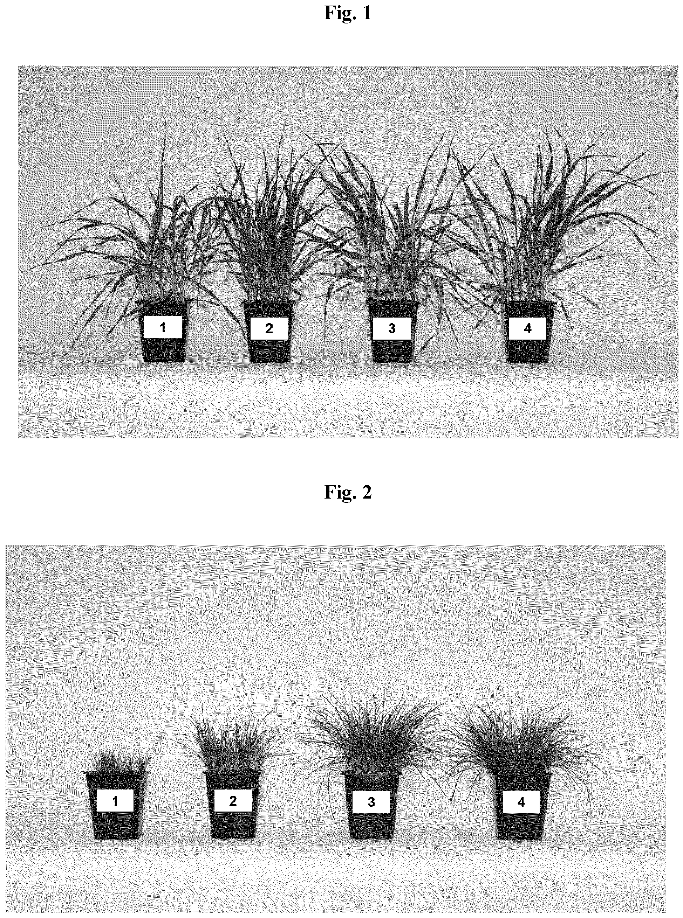

The effect of the applied fertilizer and its dose is also shown for barley and perennial ryegrass in the form of photos of plants grown as above for barley, respectively, on **Fig. 1** and perennial ryegrass on **Fig. 2****.** For both barley and perennial ryegrass, better plant growth was observed with the application of HPS-G for both doses than with the application of cattle manure (positive control) and significantly better growth than for the negative control (no manure).

### Example 3. The influence of applied fertilizer on the well-being of monocotyledonous plants, especially in drought conditions

Based on the results obtained in **Example 2,** two doses of HPS-G fertilizer were selected for further research, i.e. HPS-G was used in further cultures in the amount of 10g/L and 12.5g/L, and Florovit cattle was used as a positive control in the same dose as previously 10g/L.

Substrates with a specific fertilizer, different methods of its application, sowing of plants and their cultivation were carried out as in **Example 2,** with the difference thatafter 40 days after sowing the seeds, watering of the farms was stopped to induce drought stress for the research group of plants. All experimental objects were divided into two groups: one kept in conditions of optimal humidity and the other in conditions of water deficit. After 5 days of forced drought, during which volumetric soil moisture was monitored daily with a probe (ThetaProbe, Eijkelkamp, the Netherlands), a soil moisture level of 6 to 8% vol. was achieved. Irrigated plants were provided with optimal soil moisture for all analyzed variants at 20 to 22% vol. On day 46, control and drought-stressed plants were moved to the phytotron, where they were acclimatized to darkness for 6 hours to inhibit photosynthesis.

A series of pot experiments were conducted using HPS-G fertilizer (an organic fertilizer obtained from the frass of *H. illucens* larvae in granulated form) and negative and positive controls on selected monocotyledonous plant species.

The study determined (i) the effect of fertilizers on the welfare of monocotyledonous plants including the physiological state of plants under drought stress; (ii) the dependence of applied fertilizer on the welfare of monocotyledonous plants including under drought stress and on the content of biologically active substances in plants.

Evaluation of the impact of the applied fertilizer was determined by the following measurements/tests:
**1.Photosynthetic activity,** including:
   CO₂ assimilation level - A ( µmol m-2 s-1)
   Level of transpiration - E (mmol m-2 s-1)
   Stomatal conductance - Gs (mol m-2s-1)
   Intercellular CO₂ concentration - Ci (µmol mol-1)
**2. Chlorophyll fluorescence,** including:
   Initial fluorescence - F0 (unnominated units)
   Maximum fluorescence - Fm (unnominated units)
   Maximum photochemical efficiency of PSII - Fv/Fm
   Quantum yield of the PSII photochemical reaction - Yield
   Electron transport rate - ETR

### 3. Soil respiration - Ce (vpm), including CO₂ exchange - NCER ( µmol m-2 s-1)

### 4 Determination of total polyphenolic compounds and antioxidant activity

**Statistical analysis** of the data was performed using Statistica 13 (Dell Software Inc., USA) and R v4.1.2 software (according to the methodology indicated in the publication Kowalczewski PL, Zembrzuska J, Drożdżyńska A, Smarzyński K, Radzikowska D, Kieliszek M, et al. Influence of potato variety on polyphenol profile composition and glycoalcaloid contents of potato juice. Open Chem. 2021; 19: 1216-1223. Https://doi.org/10.1515/chem-2021-0109) with agricolae v1.3-5 package (according to R Core Team. R: A language and environment for statistical computing. Vienna. Austria: R Foundation for Statistical Computing; 2022. https://wwwr-project.org). Three independent measurements were taken for each test, unless otherwise noted. All measurements were examined using one-way analysis of variance independently for each dependent variable or two-way ANOVA to assess factor interactions. Tukey's post-hoc multiple comparison (HSD) tests were used to identify statistically homogeneous subsets at α = 0.05.

**Photosynthetic activity**of plants acclimatized in the dark was assessed using the LCpro-SD gas exchange measurement system (ADC BioScientific Ltd., Great Britain) based on the following parameters: CO₂ assimilation level (µmol m-2s -1), transpiration (mmol m-2s -1), stomata, conductance (mol m-2s -1), intercellular CO₂ concentration (vpm). Measurements were made according to the device specifications provided by the manufacturer (https://geomor.com.pl/produkt/lcpro-sd-inteligentny-system-do-pomiaru-wymiany-gazowej -intensywnosci-fotosyntezy/).

The same, youngest, fully developed leaf was selected for measurements in each plant.

Measurements were carried out in a breeding room (phytotron) at a constant air temperature of 25°C and ambient humidity of 70±5%. The sequence of measurements was the same, and drought-stressed and unstressed plants under the same fertilizer regimes were measured alternately. The concentration of CO₂ supplied to the measurement chamber (reference CO₂ level) was maintained at 360 vpm. The air flow supplied to the measurement chamber (u) was maintained at 200 µmol s-1. The H₂O concentration (reference H₂O level) was set to ambient. Gas exchange measurements were performed in three biological replicates. The obtained results are presented in **Tab. 4.**

The highest level of CO₂ assimilation, and therefore the highest efficiency of photosynthesis, both in optimal conditions and in drought conditions, was recorded for plants in which organic fertilizer of insect origin HPS-G was applied in both tested doses compared to the positive control used, i.e..organic cattle fertilizer.

**Tab. 4 Comparison of the level of CO₂ assimilation when breeding in optimal conditions and drought stress depending on the fertilizer used.**

| **Fertilizer** | **CO₂ assimilation level - A ( µmol m⁻² s⁻¹)** | |
|---|---|---|
| | **Barley** | |
| | **optimal conditions** | **drought** |
| **Negative control** | 13.37 | 0.71 |
| **Florovit cattle** | 13.86 | 3.14 |
| **HPS-G 10 g** | 16.99 | **12.43** |
| **HPS-G 12.5 g** | 15.67 | **9.31** |
| **Tukey's HSD P=.05** | 3.121 | |

The most beneficial effect on the level of transpiration under drought stress was observed in barley after the application of a dose of HPS-G of 10 g/L. However, both applied fertilizer doses, both 10 g/L and 12.5 g/L, showed a more preferable effect on transpiration compared to the positive control, the cattle manure used **(Tab. 5).**

**Tab. 5. Comparison of transpiration levels when growing under optimal conditions and under drought stress depending on the fertilizer used.**

| **Fertilizer** | **Level of transpiration - E ( mmol m⁻² s⁻¹)** | |
|---|---|---|
| | **Barley** | |
| | **optimal conditions** | **drought** |
| **Negative control** | 3.18 | 0.23 |
| **Florovit cattle** | 3.31 | 0.55 |
| **HPS-G 10 g** | 3.68 | **2.05** |
| **HPS-G 12.5 g** | 3.53 | **1.54** |
| **Tukey's HSD P=.05** | 0.780 | |

A visible positive effect on stomatal conductance during drought stress was noted after the application of a dose of HPS-G of 10 g/L and a dose of 12.5/L g. compared to cattle manure **(Tab. 6).**

**Tab. 6. Comparison of stomatal conductance when cultured in optimal conditions and under drought stress depending on the fertilizer used.**

| **Fertilizer** | **Stomatal conductance - Gs (mol m-2s-1)** | |
|---|---|---|
| | **Barley** | |
| | **optimal conditions** | **drought** |
| **Negative control** | 0.21 | 0.00 |
| **Florovit cattle** | 0.22 | 0.02 |
| **HPS-G 10 g** | 0.28 | **0.10** |
| **HPS-G 12.5 g** | 0.24 | **0.07** |
| **Tukey's HSD P=.05** | 0.082 | |

A positive effect of HPS-G fertilizer in both doses compared to the positive control was also noted for CO₂ concentration **(Tab. 7).**

**Tab. 7. The intercellular CO₂ concentration under drought stress depends on the fertilizer used.**

| **Fertilizer** | **Intercellular CO₂ concentration - Ci (µmol mol⁻¹)** | |
|---|---|---|
| | **Barley** | |
| | **optimal conditions** | **drought** |
| **Negative control** | 242 | 134 |
| **Florovit cattle** | 241 | 125 |
| **HPS-G 10 g** | 243 | **148** |
| **HPS-G 12.5 g** | 238 | **136** |
| **Tukey's HSD P=.05** | 30.9 | |

**Chlorophyll fluorescence** was measured using an OS5p Fluorometer (Optisciences Inc., Hud son, NH, USA) with the kinetic protocol selected. Measurements were conducted in accordance with the device manufacturer's specifications (OS5p+ User's Guide). This allowed us to measure the fluorescence of chlorophyll after adaptation to darkness and light and generate the following parameters: F0 - minimum fluorescence, -m - maximum fluorescence, Fv/-m - maximum photochemical efficiency of PSII, Yie-d - quantum yield of photosynthetic energy, and E - R - electron transport rate (unnominated units). The modulation source was set to red with an intensity of 22 with a possible range from 1 to 32, where 17 corresponds to 0.1 µmol. The optimal setting is the highest possible intensity that does not produce variable fluorescence. The saturation flash was set to intensity 30 in the range of 1 to 32. The measurement cycle was set to two saturation pulses 180 seconds apart. The obtained results were presented in **Tab. 8-12.**

Based on the analysis of the results of chlorophyll fluorescence measurements, there was a significant positive effect of the application of both doses of insect-derived fertilizer HPS-G on the parameters measured after plant adaptation to darkness: initial fluorescence (F0), maximum fluorescence (Fm), maximum photochemical yield of PSII (Fv/Fm), and on the parameters measured in the light: the quantum yield of the photochemical reaction in PSII (Yield) and the electron transport rate through the photosystems (ETR) under optimal conditions and under induced drought stress.

Analysis of most of the fluorescence parameters tested showed no significant differences between the two fertilizer doses. Significantly more preferable values of the tested parameters were proven, proving the higher efficiency of photosystem II of the photosynthetic apparatus under water deficit conditions in plants treated with insect-derived fertilizer HPS-G, compared to plants not fertilized and fertilized with Florovit cattle.

**Tab. 8. Comparison of initial fluorescence when grown in optimal conditions and under drought stress depending on the fertilizer used.**

| **Fertilizer** | **Initial fluorescence - F0 (unnominated units)** | |
|---|---|---|
| | **Barley** | |
| | **optimal conditions** | **drought** |
| **Negative control** | 316 | 320 |
| **Florovit cattle** | 268 | 279 |
| **HPS-G 10 g** | 261 | 268 |
| **HPS-G 12.5 g** | 255 | 260 |
| **Tukey's HSD P=.05** | 13.1 | |

**Tab. 9. Comparison of maximum fluorescence when grown under optimal conditions and drought stress depending on the fertilizer used**

| **Fertilizer** | **Maximum fluorescence - Fm (unnominated units)** | |
|---|---|---|
| | **Barley** | |
| | **optimal conditions** | **drought** |
| **Negative control** | 1214 | 1171 |
| **Florovit cattle** | 1286 | 1202 |
| **HPS-G 10 g** | 1395 | 1291 |
| **HPS-G 12.5 g** | 1314 | 1252 |
| **Tukey's HSD P=.05** | 16.9 | |

**Tab. 10. Comparison of the maximum photochemical efficiency of PSII when grown in optimal conditions and under drought stress depending on the fertilizer used**

| **Fertilizer** | **Maximum photochemical efficiency of PSII - Fv/Fm (unnominated units)** | |
|---|---|---|
| | **Barley** | |
| | **optimal conditions** | **drought** |
| **Negative control** | 0.73 | 0.73 |
| **Florovit cattle** | 0.78 | 0.78 |
| **HPS-G 10 g** | 0.80 | 0.79 |
| **HPS-G 12.5 g** | 0.80 | 0.79 |
| **Tukey's HSD P=.05** | 0.007 | |

**Tab. 11. Comparison of the quantum yield of the PSII photochemical reaction when grown under optimal conditions and under drought stress depending on the fertilizer used**

| **Fertilizer** | **Quantum yield of the PSII photochemical reaction - Yield (unnominated units)** | |
|---|---|---|
| | **Barley** | |
| | **Optimal conditions** | **drought** |
| **Negative control** | 0.30 | 0.17 |
| **Florovit cattle** | 0.31 | 0.17 |
| **HPS-G 10 g** | 0.31 | 0.18 |
| **HPS-G 12.5 g** | 0.34 | 0.19 |
| **Tukey's HSD P=.05** | 0.007 | |

**Tab. 12. Electron transport rate through photo systems under drought stress depending on fertilizer used**

| **Fertilizer** | **Electron transport rate - ETR (unnominated units)** | |
|---|---|---|
| | **Barley** | |
| | **Optimal conditions** | **drought** |
| **Negative control** | 44.2 | 24.0 |
| **Florovit cattle** | 44.8 | 25.3 |
| **HPS-G 10 g** | 48.7 | 26.1 |
| **HPS-G 12.5 g** | 47.3 | 29.0 |
| **Tukey's HSD P=.05** | 1.40 | |

Living organisms are exposed to a wide range of unfavourable environmental factors (such as drought) that cause disorders in their functioning. Crops and plants growing in natural conditions are particularly vulnerable, as they are generally affected by several stress factors. Many efforts are being made to develop and implement methods to accurately assess the impact of such factors on plant growth and development. Many methods are used to study processes occurring in plants under stress. The most insightful methods include those examining the course of photosynthesis, one of the most important processes occurring in plants and at the same time particularly sensitive to stress factors. During various types of stress in the photosynthetically active range or under reduced temperature conditions, the balance between the supply of so-called assimilatory power (ATP and NADPH) produced in photochemical reactions and the reduced demand for these products in the enzymatic reactions of the Calvin-Benson cycle - the darkroom phase of photosynthesis - is disturbed. The resulting situation forces a variety of processes to dissipate the excess absorbed energy by chlorophyll, one of which is increased fluorescence.

### Soil respiration

Measurements were made according to the specifications of the device provided by the manufacturer LCpro-SD (manufacturer ADC BioScientific), which was used to measure photosynthetic activity; the device also has the ability to convert the leaf chamber into a cylinder for measuring soil respiration. The design of the chamber consists of an acrylic dome with a built-in fan for air mixing and a bleed valve to prevent excessive pressure gradients inside the chamber. The manufacturer's description of the operation and method of procedure are presented in the device specifications (https://geomor.com.pl/produkt/lcpro-sd-inteligentny-system-do-pomiaru-wymiany-gazowej -intensywnosci-fotosyntezy/).

The concentration of CO2 supplied to the measurement chamber (reference CO₂), the flow of air supplied to the measurement chamber (u) and the concentration of H₂O (reference H₂O level) were set to ambient, i.e. the actual concentration in the environment. The following parameters were measured: NCER- Net C_{O2} Exchange Rate (µmol m-2s -1) and W flux - Net H₂O Exchange Rate (mmol m-2s -1). The same sequence of measurements was followed as for physiological measurements.

The results for the above measurements were shown in **Tab. 13 and Tab. 14.**

Analysis of measurements of gas exchange between soil and atmosphere indicative of root mass development showed significant differences in conditions of optimal hydration in the studied monocotyledonous species. In barley plants, the highest level of soil respiration was found for a dose of 12.5 g/L of HPS-G fertilizer.

Measurement of soil respiration under drought stress conditions indicates a significant effect of the fertilizer on the root system of the grass, where in both cases an application of 12.5 g/L proved to be the most appropriate dose.

**Tab. 13. Comparison of soil respiration when grown under optimal conditions and drought stress depending on the fertilizer used.**

| **Fertilizer** | **Soil respiration - Ce (vpm)** | | | |
|---|---|---|---|---|
| | **Barley** | | **Grass** | |
| | **optimal conditions** | **drought** | **optimal conditions** | **drought** |
| **Negative control** | 5.02 | 5.7 | 7.7 | 5.4 |
| **Florovit cattle** | 16.3 | 11.4 | 134.6 | 29.2 |
| **HPS-G 10 g** | 71.5 | **16.6** | 165.6 | **49.5** |
| **HPS-G 12.5 g** | 101.8 | **15.9** | 185.8 | **65.4** |
| **Tukey's P=.05** | 23.34 | | 59.417 | |

**Tab. 14. Comparison of CO₂ exchange between soil and atmosphere when growing under optimal conditions and drought stress depending on the fertilizer used.**

| **Fertilizer** | **CO₂ exchange - NCER (µmol m⁻² s⁻¹)** | | | |
|---|---|---|---|---|
| | **Barley** | | **Grass** | |
| | **optimal conditions** | **drought** | **optimal conditions** | **drought** |
| **Negative control** | 0.47 | 0.55 | 0.75 | 0.57 |
| **Florovit cattle** | 1.71 | 1.21 | 14.17 | 3.07 |
| **HPS-G 10 g** | 7.53 | **1.74** | 17.43 | **5.21** |
| **HPS-G 12.5 g** | 10.71 | **1.67** | 19.56 | **6.89** |
| **Tukey's P=.05** | 2.480 | | 6.288 | |

Analysis of measurements of gas exchange between soil and atmosphere indicative of root mass development showed significant differences in conditions of optimal hydration in the studied monocotyledonous species. In barley plants, the highest level of soil respiration was found for a dose of 12.5 g/L of HPS-G fertilizer, similar to that of grass. On the other hand, the measurement of soil respiration under drought stress conditions indicates a significant effect of HPS-G fertilizer on the root system of grasses, where a favourable effect was observed for both doses.

### Determination of total polyphenolic compounds and antioxidant activity

**Extraction of polyphenols.** Extraction of polyphenolic compounds was carried out with 80% vol. methanol solution. The previously lyophilized sample (~1 g dm) was mixed with 15 ml of methanol solution, shaken for 30 minutes using an S50 laboratory shaker (CAT Germany GmbH, Lehrte, Germany), and then centrifuged at 4000 x g for 20 minutes. The supernatant was filtered through a 0.22 µm filter and stored at - 80°C in a glass flask until analysis.

**Determination of total phenolic content and antioxidant capacity.** The total content of phenolic compounds (FAE) was determined by the standard Folin-Ciocalteu colorimetric method (Singleton VL, Orthofer R, Lamuela-Ravento's RM. Analysis of total phenols and other oxidation substrates and antioxidants by means of folin-ciocalteu reagent. Methods in Enzymology. Cambridge, MA, USA: Academic Press; 1999. pp. 152-178.) using a spectrophotometer (Multiskan GO, Thermo Fisher Scientific, Vantaa, Finland) and expressed as mg ferulic acid equivalent (FAE) per 1 g of DM (mg/g DM). The total antioxidant capacity was determined using the Trolox equivalent antioxidant capacity (TEAC) ABTS+ radical cation test according to Re et al. (Re R, Pellegrini N, Proteggente A, Pannala A, Yang M, Rice-Evans C. Antioxidant activity applying an improved ABTS radical cation decolorization assay. Free Radic Biol Med. 1999; 26: 1231-1237. https://doi.org/10.1016/s0891-5849(98)00315-3 PMID: 10381194) and determination of iron-reducing antioxidant power (FRAP) using the Benzie and Strain method (Benzie IFF, Strain JJ. The Ferric Reducing Ability of Plasma (FRAP) as a Measure of "Antioxidant Power": The FRAP Assay. Anal Biochem. 1996; 239: 70-76. https://doi.org/10.1006/abio.1996.0292 PMID: 8660627). Antioxidant activity is expressed as TEAC value (mmol Trolox/g sm).

Analysis of polyphenolic compounds by high-performance liquid chromatography (HPLC) was carried out according to the method previously described by Kowalczewski et al. (Kowalczewski PL, Zembrzuska J, Drozdzynska A, Smarzynski K, Radzikowska D, Kieliszek M, et al. Influence of potato variety on polyphenol profile composition and glycoalcaloid contents of potato juice. Open Chem. 2021; 19: 1216-1223. https://doi.org/10.1515/chem-2021-0109) on an Agilent 1260 Infinity II liquid chromatograph (Agilent Technologies, Inc., Santa Clara, CA, USA) equipped with an autosampler (G7129A), pump (G7111A) and diode array detector (G7115A) with spectral overview (190 to 400 nm).

Based on the results obtained, it can be unequivocally concluded that the use of HPS-G insect fertilizer reduces stress in plants. The higher the dose of fertilizer applied, the less polyphenolic compounds (FAE value), and the lower the antioxidant activity (TEAC). This demonstrates the beneficial effect of HPS-G fertilizer on plants and reduces the negative effects of changing environmental conditions, and in the case of plants subjected to drought, ensures their better tolerance to this abiotic stress factor. More free radicals are generated in plants in response to unfavourable conditions. In order to ensure oxidative balance, metabolites are synthesized that exhibit antioxidant activity to protect plants from degenerative changes. In the case of cattle manure (the positive control), it was noted that in many cases it caused an increase in polyphenol content and antioxidant activity, which is due to the additional stress effects resulting just from the application of this fertilizer. HPS-G fertilizer did not show such negative effects as cattle manure. HPS-G insect fertilizer effectively reduces stress in plants, and as a result, fewer secondary metabolites responsible for nullifying oxidative stress are synthesized (consequently, the antioxidant activity of plants is lower). The results obtained are illustrated by the data included in Tab.15.

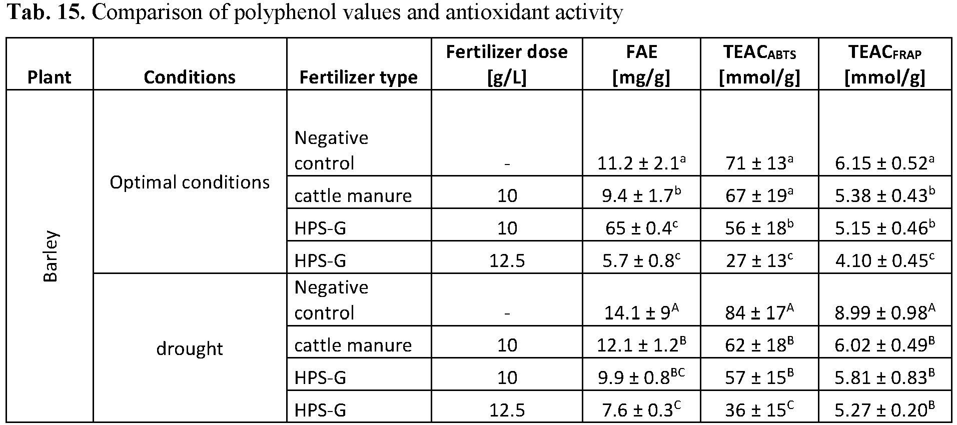

The research results presented show that:
- HPS-G fertilizer at both applied favourable doses of 10 and 12.5 g/L had a positive effect on the photosynthetic activity of monocotyledonous plants expressed as CO₂ assimilation level, transpiration level, stomatal conductance, intercellular CO₂ concentration;
- Based on the analysis of chlorophyll fluorescence measurement results, a significant, positive effect of the application of HPS-G insect fertilizer on the parameters measured after plants' adaptation to darkness was found;
- Photosynthetic activity and analysis of chlorophyll fluorescence indicate an improvement in the physiological condition of plants, i.e. their condition in conditions of water shortage after the use of HPS-G fertilizer;
- HPS-G fertilizer significantly improved the yield of barley as a representative of the monocotyledonous species, even in conditions of water deficit;
- After applying HPS-G fertilizer, a better degree of moisture was achieved in the soil subjected to drought stress, which was demonstrated by increased soil respiration
- The positive effect of HPS-G fertilizer on plant welfare under drought stress was expressed by a decrease in the content of polyphenolic compounds, as well as their lower antioxidant activity.
- HPS-G fertilizer at doses of 10.0 g/L, 12.5g/L and 15 g/L was equally effective for all three tested fertilizer application methods in barley cultivation;
- The use of HPS-G insect fertilizer reduces the content of polyphenolic compounds (FAE value) and also reduces antioxidant activity (TEAC). This shows a favourable impact on variable environmental conditions, and in the case of plants subjected to drought, provides better tolerance to this abiotic stress factor;
- HPS-G insect fertilizer effectively reduces stress in plants, and as a result, fewer secondary metabolites responsible for nullifying oxidative stress are synthesized.

## Claims

1. An organic fertilizer from sterilized and dried insect frass, **characterised in that** it comprises:
at least 4% by weight of dry matter of nitrogen, preferably 4 to 10% by weight, preferably 4.4% by weight of dry matter of nitrogen;
at least 3% by weight of dry matter of phosphorus, preferably 3 to 9% by weight, preferably 3.7% by weight of dry matter of phosphorus;
at least 3% by weight of dry matter of chitin, preferably 3 to 12% by weight, preferably 5% by weight of dry matter of chitin;
at least 1% by weight of dry matter of potassium, preferably 1 to 9% by weight, preferably 3.5% by weight of dry matter of potassium;
at least 0.2% by weight of dry matter of calcium, preferably 0.2 to 5% by weight, preferably 1% by weight of dry matter of calcium;
at least 0.2% by weight of dry matter of magnesium, preferably 0.2 to 5% by weight, preferably 1% by weight of dry matter of magnesium;
wherein the organic matter is at least 65% by weight of dry matter, preferably 65-92% by weight, preferably 87% by weight of dry matter.

2. The organic fertilizer according to claim 1, **characterised in that** it further comprises at least 3000.0 mg/kg of dry matter of sulphur, preferably from 3000 to 30000 mg/kg, preferably 9590.0 mg/kg of dry matter of sulphur;
at least 300.0 mg/kg of dry matter of iron, preferably from 300 to 30000 mg/kg, preferably 1125.0 mg/kg of dry matter of iron;
at least 50 mg/kg of dry matter of zinc, preferably from 50 to 1500 mg/kg, preferably 286.0 mg/kg of dry matter of zinc;
at least 5.0 mg/kg dry matter of copper, preferably from 5 to 150 mg/kg, preferably 27.4 mg/kg of dry matter of copper;
wherein preferably the fat constitutes at least 0.2% by weight of dry matter, more preferably from 0.2 to 5% by weight, more preferably 2.1% by weight of dry matter.

3. The organic fertilizer according to claims 1-2, **characterised in that** the insect frass is from the *Hermetia illucens* larvae culture.

4. The organic fertilizer according to claims 1-3, **characterised in that** it is in granulated form, preferably with an average granulate size in the range of 0.1-3cm³±20%, more preferably 0.4-1.5cm³±20%, more preferably 0.5-1cm³±20%, the most preferably 0.6 cm³±20%.

5. Use of organic fertilizer as defined in claims 1-4 for fertilizing and preventing the occurrence of water stress in monocotyledonous plants, preferably selected from:
cereals selected from wheat, barley, oat, corn, rye, triticale, millet, and mixtures thereof; and/or
grasses selected from perennial ryegrass, italian ryegrass, carpet bentgrass, common bentgrass, reed canary grass, yellow oatgrass, meadow fescue, red fescue, cocksfoot, timothy grass, meadowgrass, rough stalk bluegrass, fowl bluegrass, meadow foxtail, tall oatgrass and mixtures thereof.

6. The use of organic fertilizer according to claim 5, **characterised in that** the fertilizer is used in doses of 0.5 to 5 tons per hectare of land, preferably 2 to 3 tons per hectare of fertilized soil surface,
wherein preferably the fertilizer is applied to the soil together while sowing as close to the seed as possible, preferably together with the seed,
wherein preferably the fertilizer is used for pre-sowing cultivation, preferably for winter crops,
wherein preferably the fertilizer is used for top dressing,
wherein preferably when the fertilizer is used for cereals, it is applied by spreading it evenly on the field surface using a fertilizer spreader and mixing it with the soil,
wherein preferabl when the fertilizer is used for grasses to fertilize established lawns, it is applied in late summer or spring to the soil intended for the establishment of a lawn, mixing it with the topsoil, then levelling the soil and sowing grass on the soil thus prepared.

7. Use of organic fertilizer as defined in claims 1-4 to increase yields of:
- barley, especially under water deficit conditions, with the fertilizer being applied at rates of 0.5 to 5 tons per hectare of land, preferably 2 to 3 tons per hectare of fertilized soil surface, or
- perennial ryegras, especially under water deficit conditions, with the fertilizer being applied at rates of 0.5 to 5 tons per hectare of land, preferably 2 to 3 tons per hectare of fertilized soil surface.

8. Use of organic fertilizer as defined in claims 1-4 to improve the degree of soil moisture, especially under drought stress.

9. Use of the organic fertilizer in the form of sterilized and dried insect frass from *Hermetia illucens* larvae culture for fertilization and prevention of water stress in monocotyledonous plants, wherein the organic fertilizer comprises:
at least 4% by weight of dry matter of nitrogen, preferably 4 to 10% by weight, preferably 4.4% by weight of dry matter of nitrogen;
at least 3% by weight of dry matter of phosphorus, preferably 3 to 9% by weight, preferably 3.7% by weight of dry matter of phosphorus;
at least 3% by weight of dry matter of chitin, preferably 3 to 12% by weight, preferably 5% by weight of dry matter of chitin;
at least 1% by weight of dry matter of potassium, preferably 1 to 9% by weight, preferably 3.5% by weight of dry matter of potassium;
at least 0.2% by weight of dry matter of calcium, preferably 0.2 to 5% by weight, preferably 1% by weight of dry matter of calcium;
at least 0.2% by weight of dry matter of magnesium, preferably 0.2 to 5% by weight, preferably 1% by weight of dry matter of magnesium;
wherein the organic matter is at least 65% by weight of dry matter, preferably 65-92% by weight, preferably 87% by weight of dry matter.
at least 3000.0 mg/kg of dry matter of sulphur, preferably from 3000 to 30000 mg/kg, preferably 9590.0 mg/kg of dry matter of sulphur;
at least 300.0 mg/kg of dry matter of iron, preferably from 300 to 30000 mg/kg, preferably 1125.0 mg/kg of dry matter of iron;
at least 50 mg/kg of dry matter of zinc, preferably from 50 to 1500 mg/kg, preferably 286.0 mg/kg of dry matter of zinc;
at least 5.0 mg/kg of dry matter of copper, preferably from 5 to 150 mg/kg, preferably 27.4 mg/kg of dry matter of copper;
wherein preferably the fat constitutes at least 0.2% by weight of dry matter, more preferably from 0.2 to 5% by weight, more preferably 2.1% by weight of dry matter,
wherein the organic fertilizer is in granulated form with an average granulate size in the range of 0.1-3cm³±20%, more preferably 0.4-1.5cm³±20%, more preferably 0.5-1cm³±20%, the most preferably 0.6 cm³±20%,
wherein the monocotyledonous plants are selected from:
cereals selected from wheat, barley, oat, corn, rye, triticale, millet, and mixtures thereof; and/or
grasses selected from perennial ryegrass, italian ryegrass, carpet bentgrass, common bentgrass, reed canary grass, yellow oatgrass, meadow fescue, red fescue, cocksfoot, timothy grass, meadowgrass, rough stalk bluegrass, fowl bluegrass, meadow foxtail, tall oatgrass and mixtures thereof.

10. The use of the organic fertilizer according to claim 9, **characterised in that** the fertilizer is used in doses of 0.5 to 5 tons per hectare of land, preferably 2 to 3 tons per hectare of fertilized soil surface,
wherein preferably the fertilizer is applied to the soil together while sowing as close to the seed as possible, preferably together with the seed,
wherein preferably the fertilizer is used for pre-sowing cultivation, preferably for winter crops,
wherein preferably the fertilizer is applied for top dressing.

11. The use of organic fertilizer according to claims 9-10, **characterised in that**
- when the fertilizer is used for cereals, it is applied by spreading it evenly on the field surface using a fertilizer spreader and mixing it with the soil, wherein preferably the fertilizer is used for barley, or
- when the fertilizer is used for grasses to fertilize established lawns, it is applied in late summer or spring to the soil intended for the establishment of a lawn, mixing it with the topsoil, then levelling the soil and sowing grass on the soil thus prepared,
wherein preferably the fertilizer is used for perennial ryegrass.

12. The use of organic fertilizer according to claims 9-11, **characterised in that** the organic fertilizer comprises 4.4% by weight of dry matter of nitrogen; 3.7% by weight of dry matter of phosphorus; 5% by weight of dry matter of chitin; 3.5% by weight of dry matter of potassium; 1% by weight of dry matter of calcium; 1% by weight of dry matter of magnesium; 9590.0 mg/kg of dry matter of sulphur; 1125.0 mg/kg of dry matter of iron; 286.0 mg/kg of dry matter of zinc, 27.4 mg/kg of dry matter of copper, wherein the organic matter constitutes 87% by weight of dry matter, wherein fat constitutes 2.1% by weight of dry matter, wherein the organic fertilizer is in granulated form with an average granulate size of 0.6 cm³±20%.

13. A method of fertilizing and improving the moisture level of soil, especially under drought stress, intended for growing monocotyledonous plants, **characterised in that** it includes a step in which an organic fertilizer as defined in claims 1-4 is applied to the soil in doses from 0.5 to 5 tons per 1 hectare of land, preferably from 2 to 3 tons per 1 hectare of soil surface,
wherein the monocotyledonous plants are selected from cereals selected from wheat, barley, oat, corn, rye, triticale, millet, and mixtures thereof; and/or
grasses selected from perennial ryegrass, italian ryegrass, carpet bentgrass, common bentgrass, reed canary grass, yellow oatgrass, meadow fescue, red fescue, cocksfoot, timothy grass, meadowgrass, rough stalk bluegrass, fowl bluegrass, meadow foxtail, tall oatgrass and mixtures thereof.

14. The method according to claim 13, **characterised in that** the fertilizer is applied in one of the way selected from:
- top dressing;
- for pre-sowing cultivation, preferably for winter crops;
- together when sowing as close to the seed as possible, preferably together with the seed.

15. The method according to claims 13-14, **characterised in that** when fertilizer is applied :
- to soil intended for growing cereals, the fertilizer is distributed evenly on the field surface using a fertilizer spreader and mixed with the soil, wherein preferably the cereal is barley, or
- when the fertilizer is applied to the soil intended for establishing a lawn, it is applied in late summer or spring to the soil intended for establishing a lawn and then mixed with the upper layer of soil, then the soil is levelled and grass is sown on the soil thus prepared, wherein preferably the grass is perennial ryegrass..
